# EUROPEAN PATENT SPECIFICATION

(11) **EP 0 453 939 B1**
(45) Date of publication and mention of the grant of the patent: **17.07.1996**
(21) Application number: 91106128.1
(22) Date of filing: 17.04.1991
(51) Int. Cl.: G06F 15/80

(54) **Learning method for data processing system**
Lernverfahren fÜr Datenverarbeitungssystem
Méthode d'apprentissage d'un système de traitement de données

(30) Priority: 24.04.1990 JP 106361/90; 24.04.1990 JP 106360/90
(43) Date of publication of application: 30.10.1991
(73) Proprietor: YOZAN INC., Tokyo 155 (JP); SHARP KABUSHIKI KAISHA, Osaka 545 (JP)
(72) Inventor: Takatori, Sunao, Setagaza-ku, Tokyo 155 (JP); Yamamoto, Makoto, Setagaza-ku, Tokyo 155 (JP)
(74) Representative: Grünecker, Kinkeldey, Stockmair & Schwanhäusser Anwaltssozietät

(56) References cited:
- IEEE INTERNATIONAL CONFERENCE ON NEURAL NETWORKS vol. 1, 24 July 1988, San Diego, US, pp. 465-472; SHEPANSKI: 'Fast learning in artificial neural systems: Multilayer perceptron training using optimal estimation'
- IEEE FIRST INTERNATIONAL CONFERENCE ON NEURAL NETWORKS vol. 4, 21 June 1987, San Diego, US, pp. 635-642; MCAULAY: 'Engineering design neural networks using split inversion learning'
- AIP CONFERENCE PROCEEDINGS 151: NEURAL NETWORKS FOR COMPUTING 1986, Snowbird, US, pp. 283-298; LAPEDES: 'Programming a massively parallel computation universal system: static behaviour'

## Description

### FIELD OF THE INVENTION

The present invention is related to a data processing system based on the concept of multilayer neural network.

### BACKGROUND OF THE INVENTION

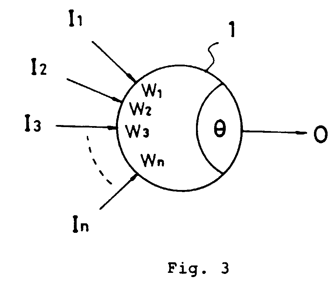

The neural network in such kind of data processing systems is constructed in layer state by settling parallely neural cell model 1 in fig. 3 ("neuron", hereinafter). Every neuron in each layer is connected by synapses with all the neurons in adjacent other layer and inputs and outputs data. Concerning to neuron 1, weights W1, W2, W3, ..., Wn are multiplied to data I1, I2, I3, ..., In inputted from outside, and data O is outputted corresponding to the comparison between the sum of the multiplication and threshold θ.

Various methods are possible for carrying out the comparison. When normalized function I[f] is adopted, output data O is expressed as activation pattern defined in formula (1).$\text{O=1 [ΣWn·In-θ]}$ When ΣWn·In is more than or equal to threshold θ, the neuron ignites and output data O is "1": when ΣWn·In is less than threshold θ, output data O is "0".

Conventional neural networks form neural layers by settling parallely such neurons and by connecting the neural layers in series. A neural network is comprised of, for example, 3 layers: input layer, middle layer and output layer, as Perceptrons suggested by Rosenblatt: every neuron in each layer is connected with all neurons in adjacent other layers by synapses.

Document IEEE INTERNATIONAL CONFERENCE ON NEURAL NETWORKS, vol. 1, 24 July 1988, SAN DIEGO, US, pages 465-472, SHEPANSKI: 'Fast learning artificial neural systems: Multilayer Perception training using optimal estimation' describes loading information in a multilayer perception using methods of optimal estimation theory. Training occurs as a simultaneous calculation where an optimal set of interconnection weights, linking two different layers, are determined using a least squares criterion, employing standard pseudoin verse matrix techniques.

In document IEEE FIRST INTERNATIONAL CONFERENCE ON NEURAL NETWORKS, vol. 4, 21 June 1987, SAN DIEGO, USA, pages 635-642, MC AULAY 'Engeneering design neural networks using split inversion learning' a learning algorithm is proposed that optimizes weights for all layers simultaneously in a global manner. Said algorithm can be computed for each layer in parallel.

### SUMMARY OF THE INVENTION

In such a data processing system, the operation of adapting the weights corresponding to the connections between neurons is called "learning". It is an important problem to guarantee its realization and to perform it efficiently. For example, in the back-propagation method, which attracted attention in these years, there are problems of getting out of local minimum and of convergence time. Especially the tendency is strong in neural networks including a lot of middle layers.

The present invention intends to solve the above problems of the prior art and has the object of providing a learning method with the ability of efficiently executing learning of the middle layer.

A learning method according to the present invention works as set out in claim 1.

In the case that a lot of middle layers are settled, the number of middle layers is increased sequentially by adding a new middle layer when the learning in a middle layer is concluded on a predetermined step and executing the same learning to said new middle layer. Here, the number of neurons contained in the input and output layer is decided by data capacity of the network the number of data is decided by the number of neurons contained in the whole neural network. Therefore, it is indispensable to increase the number of middle layers to in order to be able of processing a lot of data.

### BRIEF DESCRIPTION OF THE DRAWINGS

Fig. 1 shows the approximate structure of character recognition system applied the first embodiment of the present invention.

Figures 2A and 2B show the outline structure of neuron in input layer, middle layer and output layer.

Fig. 3 shows the outline structure of an embodiment of a neuron.

Fig. 4 shows the diagram of the relationship between the number of learning and weight.

1 and N...neuron, 31...input layer, 32...middle layer, 33...output layer.

### PREFERRED EMBODIMENT OF THE PRESENT INVENTION

Hereinafter, the present invention is explained with referring to the attached drawings.

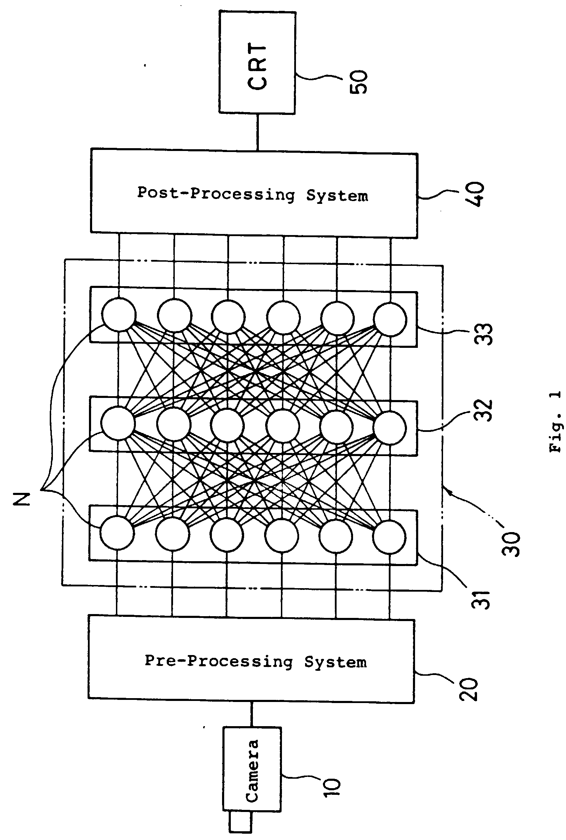

Fig. 1 shows a character recognition system comprising a data processing system related to the first embodiment. The character recognition system comprises video camera 10, pre-processing system 20, data processing system 30, post-processing system 40 and display 50. Video camera 10 is settled to input characters/letters and connected to pre-processing system 20. Pre-processing system 20 is, for example, well-known image processing system, which extracts the characteristics of inputted character/letter (the number of edge points or branch points, for instance) and output the data to data processing system 30. Data processing system 30, constructs neural network as described later, recognizes a character/letter based on the characteristics data inputted from pre-processing system 20, and outputs the data according to the recognition result to post-processing system 40. Recognition signal is character codes for instance. Post-processing system 40 stores the output data as, for example, word processor data and simultaneously outputs to display 50. Display 50 is constructed from CRT and indicates the characters/letters recognized by data processing system 40 on the display.

The neural network to construct data processing system 30 is constructed as a part of hardware of a computer. Data processing system 30 is expressed in Fig. 1 as a model. It comprises input layer 31, middle layer 32, and output layer 33: middle layer 32 is settle between input layer 31 and output layer 33. In the present embodiment, each layer 31, 32, and 33 comprises many number of neurons of N: neuron "N"s in input layer 31 are connected to all the neurons of N in middle layer 32, and those in middle layer 32 are connected to all the neurons of N in output layer 33.

As mentioned above referring to Fig. 3, each neuron N outputs the data of "1" or "0" according to the normalized function in formula (1). Neuron N is constructed by means of an amplifier, for example. Weight Wn to be multiplied to the data to be inputted to each neuron N is obtained by changeable register connected to input terminal. Threshold function is realized by switching element. That is, learning is executed amending output data and changing weight Wn by changing changeable register according to output data of each neuron.

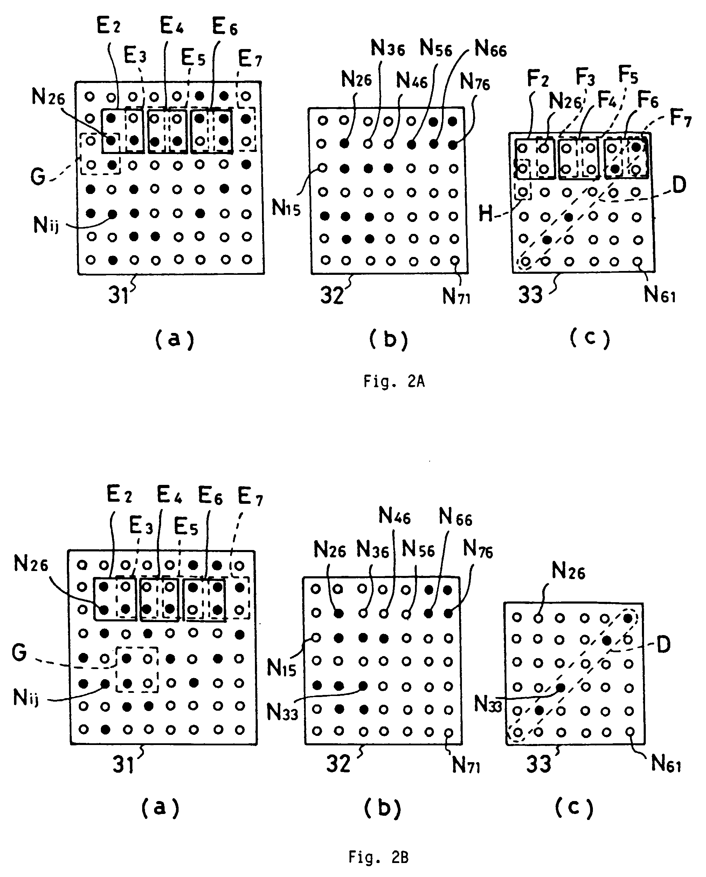

Figs. 2A and 2B (a), (b), (c) show input layer 31, middle layer 32 and output layer 33 as a model: among the three, input layer 31 possesses the most neurons and output layer 33 possesses the least. Here, for a simple explanation, it is supposed that the number of neurons in input layer 31 is 64, in middle layer 32 is 49, and in output layer 33 is 36: neurons are arranged 8, 7 and 6 in lateral and longitudinal directions in input layer 31, middle layer 32, and output layer 33, respectively. Here, it is presumed that the point in the left below the edge is the origin, and that the neuron in the location of i-th left and j-th upper is Nij.

Each neuron in input layer 31 ignites by characteristics data obtained through video camera 10. When ignition combination of N11, N12, N21 and N22 expresses the number of edge points, and N13, N14, N23 and N24 expresses the number of branch point, the ignition pattern of neurons in input layer 31 is decided artificially according to characters/letters to be inputted.

On the other hand in output layer 33, a character/letter is expressed by neuron Nii on diagonal line from the edge on lower left to the edge on upper right (neurons surrounded by broken line "D"). That is, the neurons on the diagonal line express the character code of the character/letter, and the ignition pattern of neuron in output layer 33 is decided artificially. In the present embodiment, the kind of ignition pattern is 64 for neuron Nii on diagonal line. Therefore, it is possible to recognize 64 kinds of characters/letters: recognition of alphabets is possible, for example.

Before executing learning of character/letter recognition, neurons in output layer 33 do not ignite even if character/letter data is inputted to data processing system 30. This neuron can ignite by learning: its learning is concluded when a predetermined ignition pattern appears according to inputted character/letter data. Input and output pattern for learning is the representative data to be processed in neural network: the data to be actually processed exists widely. Learning has been executed until association for the representative input and output data is performed adequately. When learning is concluded, input layer 31 and output layer 33 show ignition pattern decided artificially according to inputted character/letter data as mentioned above. It is presumed that ignition pattern in each layer of input layer 31, middle layer 32 and output layer 33 changes smoothly in these layers of 31, 32 and 33. In the present embodiment, the weights in middle layer 32 and output layer 33 are changed in order for the ignition pattern in these layers to change smoothly on learning process.

First, it is decided if neuron Nij in middle layer 32 ignites or not considering the ignition of plural neurons in input layer 31 and output layer 33 corresponding to each other. That is, a) when neurons ignite or are to be ignited with more than a predetermined rate among corresponding plural neurons in input layer 31 and output layer 33, neuron Nij in middle layer 32 is judged to have the tendency to ignite. Weights of designated neurons in middle layer 32 and output layer 33 are increased in order to obtain such ignition, or b) when the summation of an output values in corresponding areas in input layer 31 and output layer 33, multiplied by predetermined coefficient, is more than a predetermined value, neuron Nij in middle layer 32 is judged to have the tendency of ignition. Weights of designated neurons in middle layer 32 and output layer 33 are increased in order to obtain such ignition.

The reason why a coefficient is multiplied by the output value of corresponding neuron in output layer 33 is to have equal influence on a neuron in middle layer 32 as an neurons in output layer 33 and input layer 31. For example, when the corresponding neurons in input layer 31 is 4 and in output layer 33 is 1, coefficient 4 is multiplied to the output value in the output layer 33. Consequently, each neuron in input layer 31 and output layer 33 has equal influence on the ignition distribution of neurons in middle layer 32.

The judging method for determining if neurons in middle layer are to ignite or not is described concretely referring Fig. 2 (a), (b) and (c). Fig. 2 (a) shows the ignition pattern in input layer 31, Fig. 2 (b) shows that in middle layer 32, Fig. 2 (c) shows that in output layer 33: in these figures, black circles show ignited neurons, white circles show unignited neurons. In this embodiment, input layer 31 shows the ignition pattern as in the diagram according to characteristics data of inputted character/letter: the ignition pattern in output layer 33 have to be what is shown in the diagram so as to recognize it. That is, the ignition pattern in input layer 31 in the diagram is fixed according to input character/letter: the ignition pattern in output layer 33 is what on the completion of learning. The ignition pattern in middle layer 32 is decided according to the ignition pattern of input layer 31 and output layer 33.

The relationship among neurons in each layer according to Fig. 2A is described below. To each neuron in middle layer 32, 4 neurons in input layer 31 and output layer 33 are connected in principle. That is to say, the neurons connected to neuron Nij in middle layer 32 are neurons Nij, N(i+1)j, Ni(i+1), N(i+1)(j+1) in input layer 31 (the area surrounded by "E2" for neuron N26 in middle layer), and N(i-1)(j-1), Ni(j-1), N(i-1),j, Nij (the area surrounded by "F2" for neuron N26 in middle layer). The neurons connected to each neuron N11, N71, N17, and N77 on corners in middle layer 32 are the 4 neurons in input layer 31 similarly to the above: but those corresponding to them in output layer 33 are neuron N11, N61, N16 and N66 on corners. The neurons connected to each neuron Ni1, Ni7, Nij, N7j on periphery in middle layer 32 are the 4 neurons in input layer 31 similarly to the above: but those connected to them in output layer 33 are neuron N(i-1)1 and Ni1 for neuron Ni1, N(i-1)6 and Ni6 for neuron Ni7, Ni(j-1) and N1j for neuron N1j, and N6(j-1) and N6j for neuron N7j.

Neurons in middle layer 32 are judged to have the tendency to ignite when for example, more than 40% ignite to plural neurons connected to them in input layer 31 and output layer 33 in the present embodiment. In the example of Fig. 2 (b), 3 neurons ignite among the neurons in input layer 31 and output layer 33 connected to neuron N26 in middle layer 32 (the 8 neurons in area E2 and F2). Therefore, N26 in middle layer 32 is judged to be in the tendency to ignite. 2 neurons ignite among neurons in input layer 31 and output layer 33 connected to neuron N15 in middle layer 32 (6 neurons in area G and H). It means that neuron N15 in middle layer 32 has not the tendency to ignite. Neurons in middle layer 32 are judged to have the tendency to show the ignition pattern in Fig. 2 (b).

The relationship among neurons in each layer according to Fig. 2B is described below. To each neuron in middle layer 32, the area of 4 neurons in input layer 31 and one neuron in output layer 33 are connected . That is to say, the neurons corresponding to neuron Nij in middle layer 32 are neurons Nij, N(i+1)j, Ni(i+1), N(i+1)(j+1) in input layer 31 (the area surrounded by "E2" for neuron N26 in middle layer), and Nij (neuron N26 for neuron N26 in middle layer). In the present embodiment, it is settled that the neuron corresponding to neuron Ni7 on upper edge and neuron N7i on right edge in middle layer 32 in Fig. 2 (b) is neuron Ni6 on upper edge and neuron N6j on right edge in output layer 33, respectively.

The neuron in middle layer 32 is judged to have the tendency to ignite when the summation of the values in corresponding areas in input layer 31 and output layer 33, multiplied by coefficient 4, is equal to or more than "3", for instance. If the coefficient is "3" and N26 in middle layer 32 is judged to have the tendency to ignite. On the other hand, as to neuron N33 in middle layer 32, the total of output value from neuron in corresponding area G in input layer 31 is "2", and the output value from corresponding neuron N33 in output layer 33 is "1". In this case, the value is "6" by summing the output value from neuron connected to neuron N33 in middle layer 32 in input layer 31 and the value multiplied the coefficient 4 to the output value of neuron connected to it in output layer 33: neuron N33 in middle layer 32 is judged to be in the tendency of ignition. The neuron in middle layer 32 is judged to have the tendency to ignite with the ignition pattern shown in Fig. 2 (b).

On learning of character/letter recognition in the present embodiment, only a predetermined value is increased in order for the weight of each neuron in middle layer 32 and output layer 33 to obtain the ignition pattern in this way.

Explaining the increment of weight using Fig. 3, when output data O of neuron 1 in middle layer has the same value of ignition (for instance "1"), the weight of synapse ("W2" and "W3" in this case) corresponding to the data inputted from ignited neuron (for instance "I2" and "I3") is, for example, increased 5% among the neurons in input layer connected to neuron 1. The synapse weight of a neuron in output layer is processed in the same way: as described above, the weight of synapse corresponding to the neuron in middle layer decided to be ignited is increased 5%, for example.

The weight of middle layer 32 and output layer 33 is increased in order for ignition pattern to be changed smoothly among each layer of input layer 31, middle layer 32 and output layer 33. Here, deciding each neuron in input layer 31 and output layer 33 is to ignite on the same frequency as much as possible for all input characters/letters, it is possible for each neuron in middle layer 32 to ignite evenly. It is possible to prevent to fall in local minimum by it, and each neuron in middle layer 31 ignites evenly in approximation. It means that it is possible to avoid the generation of neurons with no ignition and to make neurons in middle layer 32 work efficiently.

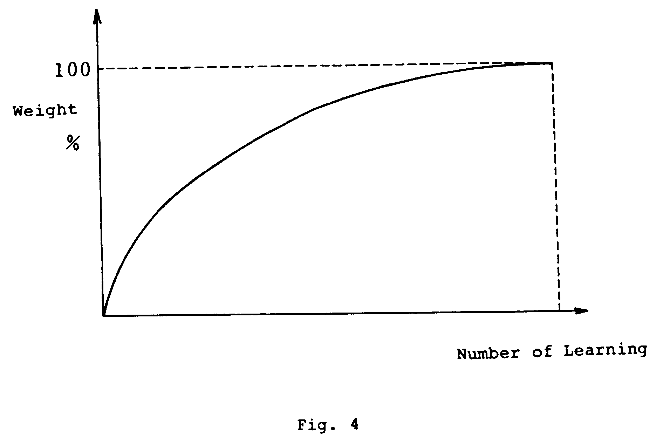

The increment of synapse weight on one learning changes as in Fig. 4 according to the number of learning. The learning of a whole system is executed gradually by plural learning, and simultaneously, fine adjustment is carried out for fine change. The learning speed is developed by rapid increase of weight in the beginning.

In the embodiment above, middle layer 32 is connected to input layer 31 and output layer 33, that is, the number of layers is 3. However, the present invention does not set limits on embodiments as 3 layers of neural networks: it is possible to apply it for neural network with more than 4 layers. In this case, first of all selecting the first middle layer the weight of synapse in the first middle layer and output layer is increased such that each neuron in the middle layer has the tendency of ignition when the plural neurons corresponding each other in input layer and output layer ignite with more than a predetermined rate. When learning is concluded so far as a predetermined step concerning to all the input characters/letters, adding the second middle layer newly, the weight of synapse is increased in the second middle layer and the layer connected to output side of it (output layer or the first middle layer), considering whether connected plural neurons ignite or not with more than a predetermined rate, in the same way as to the second middle layer. Consequently, weight distribution in the case with 4 layers can be obtained. As to the case with more than 5 layers, the same process is performed.

As to Fig. 2 (a), (b) and (c), respective 4 neurons in input layer 31 and output layer 33 are connected to one neuron in middle layer 32. The number of connected neurons is not limited by it and can select any number according to the necessity. For example, it is possible to connect respectively 9 neurons in input layer 31 and output layer 33 to one neuron in middle layer 32.

Here, to neurons N26, N36, N46, N56, N66 and N76, areas from E2 to E7 corresponds respectively in input layer 31. In input layer 31, the neuron in each area is included with duplication of adjacent area in right and left, and in up and down. Accordingly, the neuron in input layer 31 belongs to 4 areas except the edge ones: that is, it is connected to 4 neurons in middle layer 32.

On the other hand, seeing the relationship between middle layer 32 and output layer 33, neuron Nij except neuron Ni7 and N7i on upper edge and right edge in middle layer 32 is connected to 4 neurons in output layer 33. That is, to neurons N26, N36, N46, N56, N66 and N76 in middle layer 32, areas from F2 to F6 in output layer 33 correspond. In output layer 33, the neuron in each area is included with duplication of adjacent area in right and left, and in up and down. Accordingly, the neuron in output layer 33 belongs to 4 areas except the edge ones and is connected to 4 neurons in middle layer 32.

In this way, each neuron in middle layer 32 is connected to plural neurons in input layer 31 and output layer 33. Each neuron in input layer 31 and output layer 33 is connected to plural neurons in middle layer 32. That is, the adjacent neuron in input layer 31 and output layer 33 is also connected to the same neuron in middle layer 32. Therefore, the adjacent neuron in input layer 31 and output layer 33 participates in the judgment of tendency to ignite of the same neuron in middle layer 32.

The input and output data for a neuron is not limited to binarized one: it may be multi-value and analog data when the data is digital.

An output layer may be constructed to define a character/letter for recognition by all neurons: it is not necessary to be constructed to express character codes by neurons on diagonal line.

The number of neurons in the layers of 31, 32 and 33 is not limited to 36: it is possible to settle it according to the number of kinds of characters/letters to be recognized.

The present invention can be applied to not only character/letter recognition but also to pattern recognition and to voice recognition.

As mentioned above, it is possible to execute effective learning on middle layer of neural network by the present invention.

## Claims

1. A learning method for transforming an untrained network to a trained network, said network comprising an input layer (31),a middle layer (32), and an output layer (33), each said layer including a plurality of neurons, each said neuron being a signal processing element, said middle layer being arranged between said input and output layers, said output layer having less neurons than said middle layer and said middle layer having less neurons than said input layer, wherein each neuron in said middle layer is connected to each neuron in said input and output layers, said method comprising the steps of:
determining an activation pattern of said neurons in said input layer;
determining an activation pattern of said neurons in said output layer;
defining a neighborhood of said neurons in said input and output layers connected to a neuron in said middle layer;
determining a rate of activation in said neighborhood of neurons, said rate being either the total number of neurons activating in said neighborhood in said input and output layers divided by the total number of neurons in said neighborhood in said input and output layers or said rate being defined as the sum of the output values of the neighborhood in input layer (31) and the output values of the neighborhood in output layer (33) multiplied by a predetermined coefficient;
comparing said rate to a threshold value;
determining that said neuron in said middle layer has a tendency to activate if said rate is greater than said threshold value;
if said neuron in said middle layer has a tendency to activate, increasing the value of weights applied to all neurons in said input layer which are connected to said neuron in said middle layer and weights applied to all neurons in said output layer which are connected to said neuron in said middle layer, in order to increase the likelihood of activation of said neuron in said middle layer; and
repeating the above steps for each said neuron in said middle layer, until a desired activation pattern of neurons in said middle layer corresponding to a final trained network is found.

2. The learning method of claim 1 comprising the steps of:
a. increasing the value of said threshold so that less neurons in said middle layer have a tendency to activate;
b. comparing said rate in said neighborhood of neurons to said increased threshold value;
c. determining that said neuron in said middle layer has a tendency to activate when said rate is greater than said increased threshold value;
d. if said neuron in said middle layer has a tendency to activate, increasing the value of weights applied to all neurons in said input layer which are connected to said neurons in said middle layer and weights applied to all neurons in said output layer which are connected to said neuron in said middle layer, in order to increase the likelihood of activation of said neuron in said middle layer; and
e. repeating steps b.-d. for each neuron in said middle layer, until a desired activation pattern of neurons in said middle layer corresponding to a final trained network is found.

3. The learning method of claim 2 further including the steps of:
a. adding an additional middle layer between said input layer and said middle layer or between said middle layer and said output layer, said additional middle layer having a plurality of neurons;
b. connecting each neuron in said additional middle layer to each neuron in the two layers adjacent to said additional middle layer;
c. defining a neighborhood of neurons in said adjacent layers connected to a neuron in said additional middle layer;
d. determining a rate of activation in said neighborhood of neurons, said rate being the total number of neurons activating in said neighborhood divided by the total number of neurons in said neighborhood;
e. comparing said rate to a threshold value;
f. if said rate is greater than the threshold value, increasing the value of weights applied to all neurons in one of said adjacent layers which are connected to said neuron in said additional middle layer and weights applied to all neurons in said other adjacent layer which are connected to said neuron in said additional middle layer, in order to increase the likelihood of activation of said neuron in said additional middle layer, and
g. repeating steps c.-f. for each neuron in said additional middle layer, until a desired activation pattern of neurons in said additional middle layer corresponding to a final trained network is found.

4. The learning method of claim 3 further comprising the steps of:
a. increasing the value of said threshold so that less neurons in said additional middle layer have a tendency to activate;
b. comparing said rate in said neighborhood of neurons to said increased threshold value;
c. determining that said neuron in said additional middle layer has a tendency to activate when said rate is greater than said increased threshold value;
d. if said rate is greater than the increased threshold value, increasing the value of weights applied to all neurons in one of said adjacent layers which are connected to said neuron in said additional middle layer and weights applied to all neurons in said other adjacent layer which are connected to said neuron in said additional middle layer, in order to increase the likelihood of activation of said neuron in said additional middle layer; and
e. repeating steps b.-d. for each neuron in said additional middle layer, until a desired activation pattern of neurons in said additional middle layer corresponding to a final trained network is found.

5. The learning method of claim 1, wherein said learning method is a method for recognizing characters, said activation pattern in said input layer corresponds to characteristics data of an image, and said activation pattern in said output layer corresponds to character data of said image.

## Patentansprüche

1. Lernverfahren zum Überführen eines untrainierten Netzwerkes in ein trainiertes Netzwerk, wobei das Netzwerk eine Eingangsschicht (31), eine mittlere Schicht (32) und eine Ausgangsschicht (33) aufweist und jede Schicht eine Vielzahl von Neuronen enthält, wobei jedes Neuron ein Signalverarbeitungselement darstellt, die mittlere Schicht zwischen der Eingangsschicht und der Ausgangsschicht angeordnet ist, die Ausgangsschicht weniger Neuronen als die mittlere Schicht und die mittlere Schicht weniger Neuronen als die Eingangsschicht aufweist und wobei jedes Neuron in der mittleren Schicht mit jedem Neuron in der Eingangsschicht und der Ausgangsschicht verbunden ist, und wobei das Verfahren folgende Schritte aufweist:
Bestimmen eines Aktivierungsmusters der Neuronen in der Eingangsschicht;
Bestimmen eines Aktivierungsmusters der Neuronen in der Ausgangsschicht;
Definieren einer Nachbarschaft bezüglich der Neuronen in der Eingangs- und Ausgangsschicht, die mit einem Neuron in der mittleren Schicht verbunden sind;
Bestimmen einer Aktivierungsrate in der Nachbarschaft der Neuronen, wobei die Rate entweder die Gesamtanzahl der Neuronen, die in der Nachbarschaft in der Eingangs- und Ausgangsschicht aktiviert sind, dividiert durch die Gesamtanzahl der Neuronen in der Nachbarschaft in der Eingangs- und Ausgangsschicht ist oder die Summe der Ausgangswerte der Nachbarschaft in der Eingangsschicht (31) und der Ausgangswerte der Nachbarschaft in der Ausgangsschicht (33) multipliziert mit einem vorbestimmten Koeffizienten ist;
Vergleichen der Rate mit einem Schwellwert;
Bestimmen, daß das Neuron in der mittleren Schicht eine Tendenz zum Aktivieren hat, wenn die Rate größer ist als der Schwellwert;
falls das Neuron in der mittleren Schicht eine Tendenz zu aktivieren hat, Erhöhen der Gewichtswerte, die den Neuronen in der Eingangsschicht zugefügt werden, die mit dem Neuron in der mittleren Schicht verbunden sind und Erhöhen der Gewichte, die allen Neuronen der Ausgangsschicht zugefügt werden, die mit dem Neuron in der mittleren Schicht verbunden sind, um die Wahrscheinlichkeit der Aktivierung des Neurons in der mittleren Schicht zu erhöhen; und
Wiederholen der obigen Schritte für jedes Neuron in der mittleren Schicht, bis ein gewünschtes Aktivierungsmuster von Neuronen in der mittleren Schicht entsprechend einem schließlich trainierten Netzwek gefunden ist.

2. Lernverfahren nach Anspruch 1, weiterhin enthaltend die folgenden Schritte:
a) Erhöhen des Schwellwertes, so daß weniger Neuronen in der mittleren Schicht eine Tendenz zum Aktivieren haben;
b) Vergleichen der Rate in der Nachbarschaft der Neuronen mit dem erhöhten Schwellwert;
c) Bestimmen, daß das Neuron in der mittleren Schicht eine Tendenz zum Aktivieren hat, wenn die Rate größer ist als der erhöhte Schwellwert;
d) wenn das Neuron in der mittleren Schicht eine Tendenz zum Aktivieren hat, Erhöhen der Gewichtswerte, die allen Neuronen in der Eingangsschicht zugefügt werden, die mit dem Neuron in der mittleren Schicht verbunden sind und Erhöhen der Gewichtswerte der Neuronen in der Ausgangsschicht, die mit dem Neuron in der mittleren Schicht verbunden sind, um die Wahrscheinlichkeit der Aktivierung des Neurons in der mittleren Schicht zu erhöhen; und
e) Wiederholen der Schritte b) bis d) für jedes Neuron der mittleren Schicht, bis ein gewünschtes Aktivierungsmuster von Neuronen in der mittleren Schicht entsprechend einem trainierten Netzwerk gefunden ist.

3. Lernverfahren nach Anspruch 2, weiterhin aufweisend die Schritte:
a) Addieren einer zusätzlichen mittleren Schicht zwischen der Eingangsschicht und der mittleren Schicht oder zwischen der mittleren Schicht und der Ausgangsschicht, wobei die zusätzliche mittlere Schicht eine Vielzahl von Neuronen aufweist;
b) Verbinden jedes Neurons der zusätzlichen mittleren Schicht mit jedem Neuron in den zwei Schichten, die unmittelbar an die zusätzliche mittlere Schicht angrenzen;
c) Definieren einer Nachbarschaft von Neuronen in den angrenzenden Schichten, die mit einem Neuron in der zusätzlichen mittleren Schicht verbunden sind;
d) Bestimmen einer Aktivierungsrate in der Nachbarschaft der Neuronen, wobei die Rate die Gesamtanzahl der Neuronen, die in der Nachbarschaft aktivieren, dividiert durch die Gesamtanzahl der Neuronen in der Nachbarschaft ist;
e) Vergleichen der Rate mit einem Schwellwert;
f) wenn die Rate größer ist als der Schwellwert, Erhöhen der Gewichtswerte für alle Neuronen in einer der angrenzenden Schichten, die mit dem Neuron in der zusätzlichen mittleren Schicht verbunden sind und Erhöhen der Gewichte für alle Neuronen in der anderen angrenzenden Schicht, die mit dem Neuron in der zusätzlichen mittleren Schicht verbunden sind, um die Wahrscheinlichkeit der Aktivierung des Neurons in der zusätzlichen mittleren Schicht zu erhöhen, und
g) Wiederholen der Schritte c) bis f) für jedes Neuron in der zusätzlichen mittleren Schicht, bis ein gewünschtes Aktivierungsmuster der Neuronen in der zusätzlichen mittleren Schicht entsprechend einem trainierten Netzwerk gefunden ist.

4. Lernverfahren nach Anspruch 3, weiterhin enthaltend die Schritte:
a) Erhöhen des Schwellwertes, so daß weniger Neuronen in der zusätzlichen mittleren Schicht eine Aktivierungstendenz aufweisen;
b) Vergleichen der Rate in der Nachbarschaft der Neuronen mit dem erhöhten Schwellwert;
c) Bestimmen, daß das Neuron in der zusätzlichen mittleren Schicht eine Aktivierungstendenz hat, wenn die Rate größer ist als der erhöhte Schwellwert;
d) wenn die Rate größer ist als der erhöhte Schwellwert, Erhöhen der Gewichtswerte, die allen Neuronen in einer der angrenzenden Schichten zugefügt werden, die mit dem Neuron in der zusätzlichen mittleren Schicht verbunden sind und Erhöhen der Gewichtswerte für alle Neuronen in der anderen angrenzenden Schicht, die mit dem Neuron in der zusätzlichen mittleren Schicht verbunden sind, um die Aktivierungswahrscheinlichkeit für das Neuron in der zusätzlichen mittleren Schicht zu erhöhen; und
e) Wiederholen der Schritte b) bis d) für jedes Neuron in der zusätzlichen mittleren Schicht, bis ein gewünschtes Aktivierungsmuster der Neuronen in der zusätzlichen mittleren Schicht entsprechend einem trainierten Netzwerk gefunden ist.

5. Lernverfahren nach Anspruch 1, wobei das Lernverfahren ein Verfahren zum Erkennen von Zeichen ist, und wobei das Aktivierungsmuster in der Eingangsschicht charakteristischen Daten eines Bildes entspricht und das Aktivierungsmuster in der Ausgangsschicht charakteristischen Daten des Bildes entspricht.

## Revendications

1. Procédé d'apprentissage permettant de transformer un réseau non formé en un réseau formé, ledit réseau comprenant une couche d'entrée (31), une couche médiane (32) et une couche de sortie (33), chacune desdites couches comprenant une pluralité de neurones, chacun desdits neurones étant un élément de traitement de signaux, ladite couche médiane étant placée entre ladite couche d'entrée et ladite couche de sortie, ladite couche de sortie ayant moins de neurones que ladite couche médiane et ladite couche médiane ayant moins de neurones que ladite couche d'entrée, dans lequel chaque neurone de ladite couche médiane est relié à chaque neurone de ladite couche d'entrée et de ladite couche de sortie, ledit procédé comprenant les étapes de :
détermination d'une configuration d'activation desdits neurones dans ladite couche d'entrée ;
détermination d'une configuration d'activation desdits neurones dans ladite couche de sortie ;
définition d'un voisinage desdits neurones dans ladite couche d'entrée et dans ladite couche de sortie, reliés à un neurone dans ladite couche médiane ;
détermination d'un taux d'activation dans ledit voisinage des neurones, ledit taux étant soit le nombre total des neurones entrant en fonction dans ledit voisinage dans ladite couche d'entrée et dans ladite couche de sortie, divisé par le nombre total de neurones dans ledit voisinage dans ladite couche d'entrée et dans ladite couche de sortie, soit défini comme la somme des valeurs de sortie du voisinage dans la couche d'entrée (31) et des valeurs de sortie du voisinage dans la couche de sortie (33), multipliée par un coefficient prédéterminé ;
comparaison dudit taux et d'une valeur de seuil ;
détermination du fait que ledit neurone dans ladite couche médiane a tendance à entrer en fonction si ledit taux est supérieur à ladite valeur de seuil ;
si ledit neurone dans ladite couche médiane a tendance à entrer en fonction, augmentation de la valeur des poids appliqués à tous les neurones de ladite couche d'entrée, qui sont reliés audit neurone de ladite couche médiane, et de la valeur des poids appliqués à tous les neurones de ladite couche de sortie, qui sont reliés audit neurone de ladite couche médiane, afin d'augmenter la probabilité d'activation dudit neurone de ladite couche médiane ; et
répétition des étapes ci-dessus pour chacun desdits neurones dans ladite couche médiane, jusqu'à ce que soit trouvée une configuration d'activation désirée des neurones dans ladite couche médiane, correspondant à un réseau final formé.

2. Procédé d'apprentissage selon la revendication 1, comprenant les étapes de :
a. augmentation de la valeur dudit seuil afin que moins de neurones de ladite couche médiane aient tendance à entrer en fonction ;
b. comparaison dudit taux dans ledit voisinage des neurones et de ladite valeur de seuil augmentée ;
c. détermination du fait que ledit neurone dans ladite couche médiane a tendance à entrer en fonction lorsque ledit taux est supérieur à ladite valeur de seuil augmentée ;
d. si ledit neurone dans ladite couche médiane a tendance à entrer en fonction, augmentation de la valeur des poids appliqués à tous les neurones de ladite couche d'entrée, qui sont reliés audit neurone de ladite couche médiane, et de la valeur des poids appliqués à tous les neurones de ladite couche de sortie, qui sont reliés audit neurone de ladite couche médiane, afin d'augmenter la probabilité d'activation dudit neurone de ladite couche médiane ; et
e. répétition des étapes b. à d. pour chaque neurone dans ladite couche médiane, jusqu'à ce que soit trouvée une configuration d'activation désirée des neurones dans ladite couche médiane, correspondant à un réseau final formé.

3. Procédé d'apprentissage selon la revendication 2, comprenant en outre les étapes de :
a. addition d'une couche médiane supplémentaire entre ladite couche d'entrée et ladite couche médiane, ou entre ladite couche médiane et ladite couche de sortie, ladite couche médiane supplémentaire ayant une pluralité de neurones ;
b. connexion de chaque neurone de ladite couche médiane supplémentaire à chaque neurone des deux couches adjacentes à ladite couche médiane supplémentaire ;
c. définition d'un voisinage de neurones dans lesdites couches adjacentes, reliés à un neurone de ladite couche médiane supplémentaire ;
d. détermination d'un taux d'activation dans ledit voisinage de neurones, ledit taux étant le nombre total de neurones entrant en fonction dans ledit voisinage, divisé par le nombre total de neurones dans ledit voisinage ;
e. comparaison dudit taux et d'une valeur de seuil ;
f. si ledit taux est supérieur à la valeur de seuil, augmentation de la valeur des poids appliqués à tous les neurones dans l'une desdites couches adjacentes, qui sont reliés audit neurone de ladite couche médiane supplémentaire, et de la valeur des poids appliqués à tous les neurones, dans l'autre desdites couches adjacentes, qui sont reliés audit neurone de ladite couche médiane supplémentaire, afin d'augmenter la probabilité d'activation dudit neurone de ladite couche médiane supplémentaire, et
g. répétition des étapes c. à f. pour chaque neurone de ladite couche médiane supplémentaire, jusqu'à ce que soit trouvée une configuration d'activation désirée des neurones dans ladite couche médiane supplémentaire, correspondant à un réseau final formé.

4. Procédé d'apprentissage selon la revendication 3, comprenant en outre les étapes de :
augmentation de la valeur dudit seuil afin que moins de neurones de ladite couche médiane supplémentaire aient tendance à entrer en fonction ;
b. comparaison dudit taux dans ledit voisinage des neurones et de ladite valeur de seuil augmentée ;
c. détermination du fait que ledit neurone dans ladite couche médiane a tendance à entrer en fonction lorsque ledit taux est supérieur à ladite valeur de seuil augmentée ;
d. si ledit taux est supérieur à la valeur de seuil, augmentation de la valeur des poids appliqués à tous les neurones dans l'une desdites couches adjacentes, qui sont reliés audit neurone de ladite couche médiane supplémentaire, et de la valeur des poids appliqués à tous les neurones, dans l'autre desdites couches adjacentes, qui sont reliés audit neurone de ladite couche médiane supplémentaire, afin d'augmenter la probabilité d'activation dudit neurone de ladite couche médiane supplémentaire ; et
e. répétition des étapes b. à d. pour chaque neurone de ladite couche médiane supplémentaire, jusqu'à ce que soit trouvée une configuration d'activation désirée des neurones dans ladite couche médiane supplémentaire, correspondant à un réseau final formé.

5. Procédé d'apprentissage selon la revendication 1, dans lequel ledit procédé d'apprentissage est un procédé de reconnaissance des caractères, ladite configuration d'activation dans ladite couche d'entrée correspondant à des données de caractéristiques d'une image, et ladite configuration d'activation dans ladite couche de sortie correspondant à des données de caractères de ladite image.
